# EUROPEAN PATENT APPLICATION

(11) **EP 4 826 235 A1**
(43) Date of publication of application: **21.10.2026**
(21) Application number: 24918602.4
(22) Date of filing: 23.08.2024
(51) Int. Cl.: F02D 45/00, F01N 3/08, F01N 3/24

(54) **ENGINE AND METHOD FOR DIAGNOSING ENGINE**

(30) Priority: 16.01.2024 JP 2024004678
(71) Applicant: KUBOTA CORPORATION, Osaka-shi, Osaka 556-8601 (JP)
(72) Inventor: NAKASHIMA Toshihiro, Sakai-shi, Osaka 592-8331 (JP); SUZUKI Ikki, Sakai-shi, Osaka 592-8331 (JP)
(74) Representative: Dolleymores
(86) International application number: PCT/JP2024/030024
(87) International publication number: WO 2025/154314

(57) **Abstract**

Provided are an engine and a method for diagnosing an engine capable of improving accuracy of failure diagnosis of an NOx sensor.

An engine is configured to perform an NOx sensor failure diagnosis operation S103 accompanied by DPF regeneration processing, EGR stop, and urea solution injection stop under control of the electronic control device, and to transmit S105 detection data of a pair of NOx concentrations J, K detected by the pair of NOx sensors in the NOx sensor failure diagnosis operation to an engine diagnosis tool outside the engine that performs failure diagnosis S108 of the pair of NOx sensors based on the detection data. In the method for diagnosing an engine, the failure diagnosis S108 of the NOx sensors is performed with the engine diagnosis tool based on the detection data transmitted from the engine.

## Description

### TECHNICAL FIELD

The present invention relates to an engine and a method for diagnosing an engine, and more specifically relates to an engine and a method for diagnosing an engine capable of improving accuracy of failure diagnosis of an NOx sensor.

### BACKGROUND ART

Conventionally, there is an engine that performs failure diagnosis of an NOx sensor based on detection of an NOx concentration in engine exhaust (see Patent Document 1, for example).

### PRIOR ART DOCUMENTS

### PATENT DOCUMENTS

Patent Document 1: Japanese Patent Application Laid-open No. 2011-241737 (see Fig. 4)

### SUMMARY OF THE INVENTION

### PROBLEMS TO BE SOLVED BY THE INVENTION

<<Problem>> Accuracy of failure diagnosis of an NOx sensor may decrease.

In the engine of Patent Document 1, when the exhaust temperature is low, the exhaust flow rate is not stabilized, urea crystals remain in the exhaust passage, and the NOx concentration decreases with EGR being continued. Thus, accuracy of the detection data of the NOx concentration detected with the NOx sensor decreases. In addition, the detection data of the NOx concentration greatly changes because of the NOx purification function of the SCR with urea solution being injected. Thus, accuracy of failure diagnosis of the NOx sensor may decrease.

An object of the present invention is to provide an engine and a method for diagnosing an engine capable of improving accuracy of failure diagnosis of an NOx sensor.

### SOLUTIONS TO THE PROBLEMS

The main configuration of the present invention is as follows.

### (Invention According to Claim 1)

An engine configured to perform an NOx sensor failure diagnosis operation accompanied by DPF regeneration processing, EGR stop, and urea solution injection stop under control of the electronic control device, and to transmit detection data of a pair of NOx concentrations detected by the pair of NOx sensors in the NOx sensor failure diagnosis operation to an engine diagnosis tool outside the engine that performs failure diagnosis of the pair of NOx sensors based on the detection data.

### (Invention According to Claim 3)

A method for diagnosing an engine, the method including: controlling an electronic control device to cause an engine to perform an NOx sensor failure diagnosis operation accompanied by DPF regeneration processing, EGR stop, and urea solution injection stop, and transmitting, to an engine diagnosis tool, detection data of a pair of NOx concentrations detected by a pair of NOx sensors on an exhaust upstream side and an exhaust downstream side of an SCR in the NOx sensor failure diagnosis operation; and causing the engine diagnosis tool to perform failure diagnosis of the pair of NOx sensors based on the detection data.

### EFFECTS OF THE INVENTION

The invention according to claim 1 or 3 has the following effects.

<<Effect 1>> Accuracy of failure diagnosis of the pair of NOx sensors can be improved.

During the NOx sensor failure diagnosis operation, the temperature of the exhaust gas is raised through DPF regeneration processing to stabilize the exhaust flow rate, the urea crystal adhering to the exhaust passage is burned out, and the NOx concentration is increased because of the EGR stop. Thus, accuracy of the detection data of the NOx concentration with the pair of NOx sensors is enhanced. Moreover, this detection data is not affected by the NOx purification function of the SCR because of the urea solution injection stop, and is hardly changed. Through transmission of the pair of detection data of the NOx concentration, which has high accuracy and is hardly changed, to the engine diagnosis tool like this, the engine diagnosis tool can perform failure diagnosis of the pair of NOx sensors based on the pair of detection data of the NOx concentration, and can improve the accuracy of the failure diagnosis of the pair of NOx sensors.

<<Effect 2>> Failure diagnosis of the pair of NOx sensors can be performed with the exhaust device being mounted on the engine.

Detection data of a pair of NOx concentrations detected by the pair of NOx sensors in the NOx sensor failure diagnosis operation is transmitted to the engine diagnosis tool outside the engine that performs failure diagnosis of the pair of NOx sensors based on the detection data. Thus, failure diagnosis of the NOx sensors can be performed with the exhaust device being mounted on the engine.

### BRIEF DESCRIPTION OF THE DRAWINGS

Fig. 1 is a schematic diagram of an engine according to an embodiment of the present invention and an engine diagnosis tool used for diagnosis of the engine.
Fig. 2 is a block diagram illustrating an electronic control device of the engine of Fig. 1 and peripheral components such as a sensor and an actuator connected to the electronic control device.
Fig. 3 is a flowchart of control with the electronic control device of the engine in engine failure diagnosis during normal operation of the engine of Fig. 1.
Fig. 4 includes flowcharts of control in NOx sensor failure diagnosis (first time) using the engine diagnosis tool of Fig. 1, in which Fig. 4(A) is a flowchart of control with the engine diagnosis tool, and Fig. 4(B) is a flowchart of control with the electronic control device of the engine.
Fig. 5 includes flowcharts of control in NOx sensor failure diagnosis (second time) of the engine using the engine diagnosis tool of Fig. 1, in which Fig. 5(A) is a flowchart of control with the engine diagnosis tool, and Fig. 5(B) is a flowchart of control with the electronic control device of the engine.
Fig. 6 includes flowcharts of control in engine function recovery check diagnosis with respect to an NOx purification function after replacement of the NOx sensor using the engine diagnosis tool of Fig. 1, in which Fig. 6(A) is a flowchart of control with the engine diagnosis tool, and Fig. 6(B) is a flowchart of control with the electronic control device of the engine.

### EMBODIMENTS OF THE INVENTION

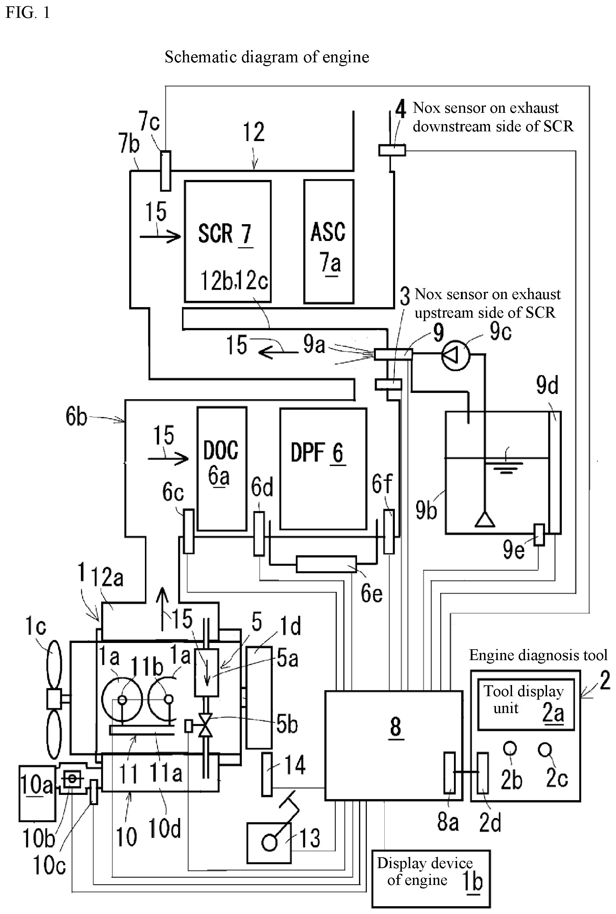

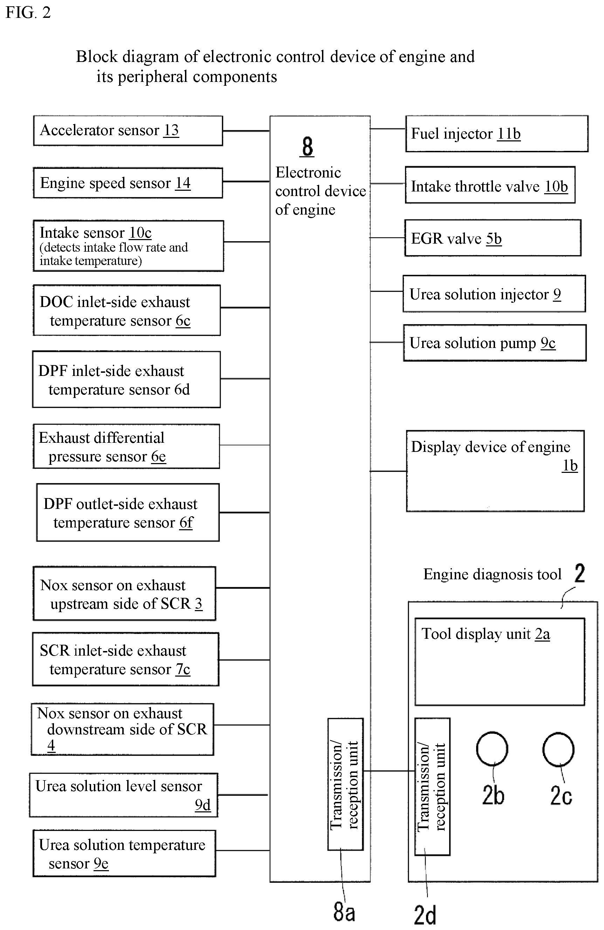

Figs. 1 to 6 are diagrams for describing an engine and a method for diagnosing an engine according to an embodiment of the present invention. In this embodiment, a vertical inline multi-cylinder diesel engine and a method for diagnosing the engine will be described.

As shown in Fig. 1, an engine (1) includes an electronic control device (8), an intake device (10), a fuel supply device (11), and an exhaust device (12). An engine cooling fan (1c) is disposed on the front side of the engine (1), and a flywheel (1d) is disposed on the rear side of the engine (1).

The electronic control device (8) is an engine ECU. ECU is an abbreviation of electronic control unit.

The intake device (10) includes an air cleaner (10a), an intake throttle valve (10b), an intake sensor (10c), and an intake manifold (10d) in this order from the upstream side of an intake path. The opening and closing timing and the opening degree of the intake throttle valve (10b) are controlled by the electronic control device (8). The intake sensor (10c) detects an intake flow rate and an intake temperature. The intake device (10) is subjected to EGR from the exhaust device (12) via an EGR device (5). EGR is an abbreviation of exhaust gas recirculation. The EGR device (5) includes an EGR cooler (5a) and an EGR valve (5b) in order from the EGR upstream side, and opening and closing of the EGR valve (5b) is controlled by the electronic control device (8).

As shown in Fig. 1, the fuel supply device (11) is of a common rail type, and includes a common rail (11a) and a fuel injector (11b) that injects fuel into each cylinder (1a).

The fuel injector (11b) is controlled by the electronic control device (8), is opened for a predetermined time at a predetermined timing, and injects a predetermined amount of fuel. The fuel injection amount is regulated by a governor function of the electronic control device (8) based on an accelerator position detected by an accelerator sensor (13) and an actual engine speed detected by an engine speed sensor (14).

Under the control of the electronic control device (8), in the DPF regeneration processing, post injection is performed in addition to main injection from the fuel injector (11b). After injection may be performed between the main injection and the post injection.

As shown in Fig. 1, the exhaust device (12) includes, in order from the exhaust upstream side, an exhaust manifold (12a), a DOC (6a), a DPF (6), a urea solution injector (9), an SCR (7), and an ASC (7a). The DOC (6a) and the DPF (6) are housed in a DPF case (6b). The SCR (7) and the ASC (7a) are housed in an SCR case (7b). A mixing passage (12b) is provided between the DPF case (6b) and the SCR case (7b). A urea solution injector (9) is disposed on the upstream side of the mixing passage (12b). Urea solution (9a) injected from the urea solution injector (9) into the mixing passage (12b) is mixed with an exhaust (15) and supplied to the SCR (7).

DOC is an abbreviation of diesel oxidation catalyst, and oxidizes CO (carbon monoxide) and NO (nitrogen monoxide) in the exhaust (15) and catalytically combusts the after-injection fuel and the post-injection fuel injected from the fuel injector (11b) at the time of DPF regeneration processing to raise the temperature of the exhaust (15) and incinerate and remove PM deposited in the DPF (6). PM is an abbreviation of particulate matter.

DPF is an abbreviation of diesel particulate filter, and captures PM in exhaust.

SCR is an abbreviation of selective catalytic reduction type catalyst, and is the urea solution (9a) injected into the exhaust (15) from the urea solution injector (9) to cause the SCR (7) to adsorb ammonia, and reduce NOx (nitrogen oxide) in the exhaust using the ammonia as a reducing agent to obtain N₂ (nitrogen gas) and H₂O (water vapor).

ASC is an abbreviation of oxidation catalyst for ammonia purification, and is for preventing NH₃ (ammonia) from slipping.

As shown in Fig. 1, the exhaust device (12) includes, from the exhaust upstream side, a DOC inlet-side exhaust temperature sensor (6c), a DPF inlet-side exhaust temperature sensor (6d), an exhaust differential pressure sensor (6e), a DPF outlet-side exhaust temperature sensor (6f), an NOx sensor (3) on the exhaust upstream side of the SCR (7), an SCR inlet-side exhaust temperature sensor (7c), and an NOx sensor (4) on the exhaust downstream side of the SCR (7). At the time of normal operation of the engine, an NOx reduction operation is performed by EGR and the SCR (7) accompanied with urea solution injection, the exhaust differential pressure sensor (6e) detects a differential pressure between the inlet and outlet of the DPF (6), the PM accumulation amount reaches the regeneration start required amount, and when the DOC (6) reaches its activation temperature because of the temperature rise by the exhaust (15), a DPF regeneration processing starts.

As shown in Fig. 1, the urea solution (9a) in a urea solution tank (9b) is pumped to the urea solution injector (9) through a urea solution pump (9c). The urea solution injector (9) is controlled by the electronic control device (8), is opened for a predetermined time at a predetermined timing, and a predetermined amount of the urea solution (9a) is injected to the mixing passage (12b). The injection amount of the urea solution (9a) is calculated by a calculation unit of the electronic control device (8) of the engine (1) based on a pair of NOx concentrations (J)(K) detected by a pair of NOx sensors (3)(4), an intake flow rate detected by the intake sensor (10c), and the like. A urea solution level sensor (9d) and a urea solution temperature sensor (9e) are disposed in the urea solution tank (9b), and the electronic control device (8) of the engine (1) causes a display device (1b) of the engine (1) to display a recommendation for replenishment of the urea solution (9a) or prevention of freezing of the urea solution (9a).

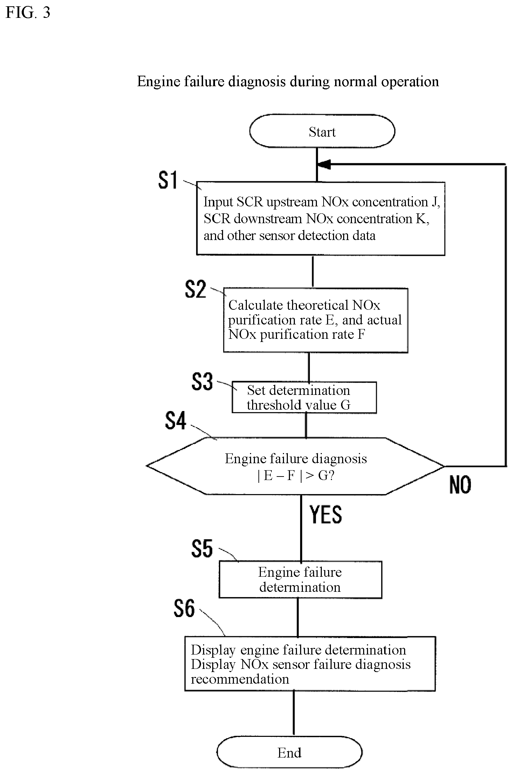

As shown in Fig. 1, the display device (1b) of the engine (1) is connected to the electronic control device (8) of the engine (1), and the display device (1b) of the engine (1) is disposed on an operation panel such as a dashboard of an engine mounted machine, and displays an engine failure determination display (S6) and the like in Fig. 3 to be described later.

The engine mounted machine refers to a traveling or installation type agricultural machine, a construction machine, or the like on which the engine (1) is mounted. Examples of the traveling type machine include a tractor and a backhoe, and examples of the installation type machine include an engine generator.

As the display device (1b) of the engine (1), a liquid crystal display, an organic EL display, or the like can be used. EL is an abbreviation of electroluminescence.

An overview of diagnosis procedure for the engine (1) with the electronic control device (8) of the engine (1) is as follows.

As shown in Fig. 3, the electronic control device (8) of the engine (1) performs failure diagnosis (S4) of the engine (1) during normal operation of the engine. When failure determination (S5) regarding the engine (1) is made, the electronic control device (8) causes the display device (1b) of the engine (1) to display an engine failure indication (S6) and simultaneously displays a recommendation for failure diagnosis of the NOx sensor.

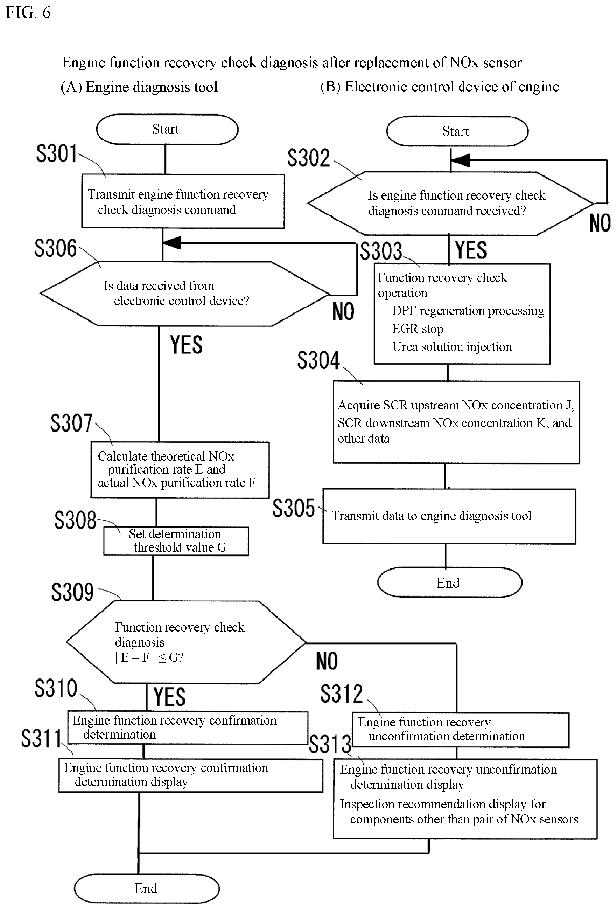

The user of the engine mounted machine that has confirmed the display (S6) requests a service engineer to perform NOx sensor failure diagnosis. Using the engine diagnosis tool (2), the service engineer causes the electronic control device (8) of the engine (1) to perform NOx sensor failure diagnosis operations (S103)(S203). After the NOx sensor is replaced based on confirmation of the NOx sensor failure determination displays (S110)(S210) with the NOx sensor failure diagnosis (S108)(S208), the service engineer performs an engine function recovery check diagnosis (S309) with respect to the NOx purification function after replacement of the NOx sensor shown in Fig. 6(A).

When the failure determination (S5) of the engine (1) is made, the output of the engine (1) is limited by the electronic control device (8) of the engine (1), the engine mounted machine becomes inoperable, and the user is guided to request the service engineer to perform NOx sensor failure diagnosis.

As shown in Fig. 1, the engine (1) includes the DPF (6), the SCR (7), a pair of NOx sensors (3)(4) on the exhaust upstream side and the exhaust downstream side of the SCR (7), the electronic control device (8), the EGR device (5), and the urea solution injector (9).

As shown in Fig. 3, in the engine (1), the failure diagnosis (S4) of the engine (1) during the normal operation is performed by the electronic control device (8) of the engine (1) based on the NOx purification rate of the SCR (7) during the engine operation, and when the failure determination (S5) of the engine (1) is made, the determination result is displayed (S6) on the display device (1b) of the engine (1).

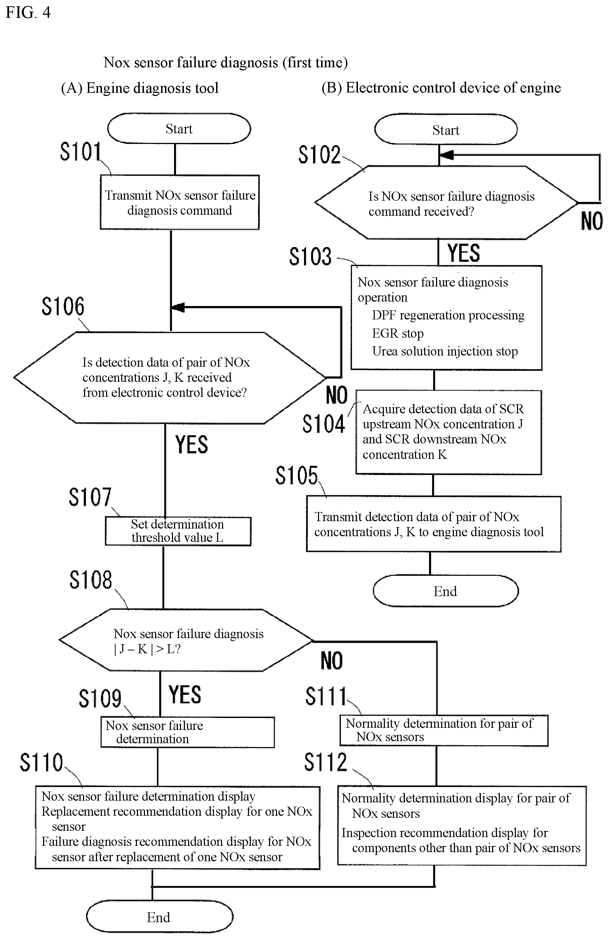

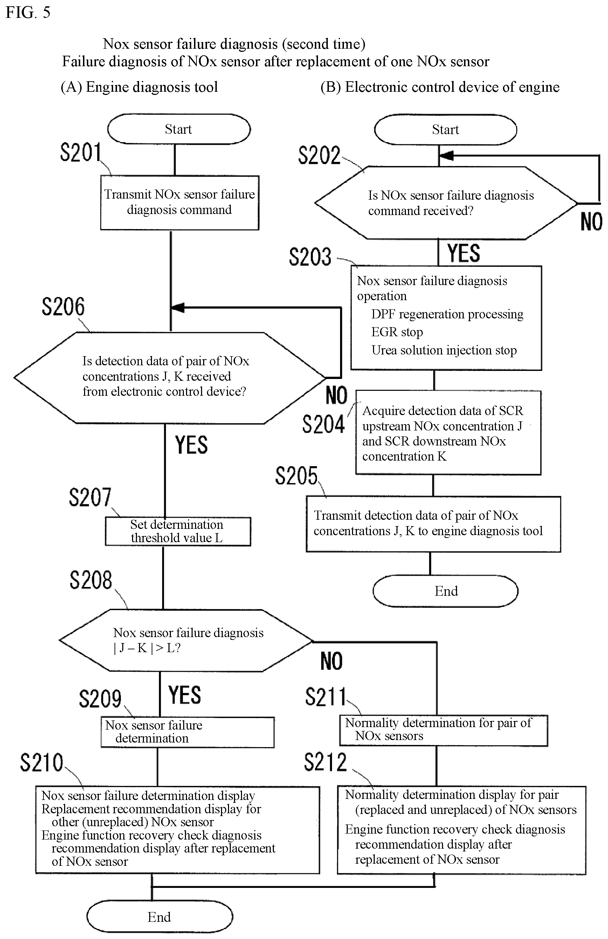

The normal operation refers to an operation other than the NOx sensor failure diagnosis operation (S103)(S203) shown in Figs. 4(B) and 5(B) or the engine function recovery check operation (S303) after replacement of the NOx sensor shown in Fig. 6(B), and the NOx reduction processing is performed by EGR and urea solution injection during the normal operation.

As shown in Figs. 4(B) and 5(B), under the control of the electronic control device (8), the engine (1) is configured to perform NOx sensor failure diagnosis operations (S103)(S203) involving DPF regeneration processing, EGR stop, and urea solution injection stop, and transmit detection data of a pair of NOx concentrations (J)(K) detected by the pair of NOx sensors (3)(4) in the NOx sensor failure diagnosis operations (S103)(S203) to the engine diagnosis tool (2) outside the engine (1) that performs failure diagnoses (S108)(S208) of the pair of NOx sensors (3)(4) based on the detection data (S105)(S205).

In this engine, the following effects can be obtained.

That is, during the NOx sensor failure diagnosis operation (S103)(S203) shown in Figs. 4(B) and 5(B), the temperature of the exhaust gas is raised through the DPF regeneration processing to stabilize the exhaust flow rate, the urea crystal adhering to the exhaust passage (12c) is burned out, and the NOx concentration is further raised through the EGR stop. Thus, the accuracy of the detection data of the NOx concentrations (J)(K) with the pair of NOx sensors (3)(4) is enhanced. Moreover, the detection data is not affected by the NOx purification function of the SCR (7) because of the urea solution injection stop, and is hardly changed. The detection data of the pair of NOx concentrations (J)(K), which has high accuracy and is hardly changed, is transmitted (S105)(S205) to the engine diagnosis tool (2), whereby the engine diagnosis tool (2) can perform failure diagnosis (S108)(S208) of the pair of NOx sensors (3)(4) based on the detection data of the pair of NOx concentrations (J)(K) as illustrated in Figs. 4(A) and 5(A), and the accuracy of the failure diagnosis (S108)(S208) of the pair of NOx sensors (3)(4) can be increased.

In addition, the engine can also obtain the following effects.

As shown in Figs. 4(A) and 5(A), detection data of the pair of NOx concentrations (J)(K) detected by the pair of NOx sensors (3)(4) in the NOx sensor failure diagnosis operation (S103)(S203) is transmitted (S105)(S205) to the engine diagnosis tool (2) outside the engine (1) that performs failure diagnosis (S108)(S208) of the pair of NOx sensors (3)(4) based on the detection data. Thus, the failure diagnosis of the NOx sensors (3)(4) can be performed with the exhaust device (12) illustrated in Fig. 1 being mounted on the engine (1).

Unlike the DPF regeneration processing during the normal operation, the DPF regeneration processing accompanied by the NOx sensor failure diagnosis operation (S103)(S203) illustrated in Figs. 4(A) and 5(A) is performed even when the PM accumulation amount has not reached the regeneration start required amount. The DPF regeneration processing is performed by causing the fuel injector (11b) to perform post injection after the inlet side exhaust temperature of the DOC (6a) shown in Fig. 1 reaches a temperature at which the DOC (6a) can be activated, as in the normal operation. When the inlet side exhaust temperature of the DOC (6a) is low, the inlet side exhaust temperature of the DOC (6a) is raised to the temperature at which the DOC (6a) can be activated by narrowing the opening of the intake throttle valve (10b), increasing the main injection fuel, performing after injection, and the like.

When an exhaust pipe fuel injection valve is provided, the DPF regeneration processing can be performed through exhaust pipe injection of the exhaust pipe fuel injection valve instead of post injection of the fuel injector (11b).

As shown in Fig. 6(B), under the control of the electronic control device (8), the engine is configured to perform an engine function recovery check operation (S303) with respect to the NOx purification function after replacement of the NOx sensor involving DPF regeneration processing, EGR stop, and urea solution injection, and transmit detection data of the pair of NOx concentrations (J)(K) detected by the pair of NOx sensors (3)(4) in the function recovery check operation (S303) to the engine diagnosis tool (2) that performs an engine function recovery check diagnosis (S309) with respect to the NOx purification function after replacement of NOx sensor based on the detection data (S305).

In this engine, the following effects can be obtained.

That is, during the engine function recovery check operation (S303) with respect to the NOx purification function after replacement of the NOx sensor shown in Fig. 6(B), the temperature of the exhaust gas is raised through the DPF regeneration processing to stabilize the exhaust flow rate, and the urea crystal adhering to the exhaust passage (12c) shown in Fig. 1 is burned out, and the NOx concentration is increased through EGR stop. Thus, accuracy of the detection data of the NOx concentrations (J)(K) with the pair of NOx sensors (3)(4) shown in Fig. 6(B) is enhanced. Through transmission (S305) of the pair of highly accurate NOx concentrations (J)(K) as detection data to the engine diagnosis tool (2) like this, as illustrated in Fig. 6(A), the engine diagnosis tool (2) can perform the engine function recovery check diagnosis (S309) after replacement of the NOx sensor based on the detection data of the pair of NOx concentrations (J)(K), and accuracy of the engine function recovery check diagnosis (S309) with respect to the NOx purification function after replacement of NOx sensor in the engine diagnosis tool (2) is enhanced.

Next, a method for diagnosing the engine (1) will be described.

The diagnosis of the engine (1) is performed in the order of the failure diagnosis (S4) of the engine (1) during the normal operation shown in Fig. 3, the failure diagnosis (S108)(S208) of the NOx sensor, replacement of the NOx sensor based on confirmation of the NOx sensor failure determination display (S110)(S210) shown in Figs. 4(A) and 5(A), and the engine function recovery check diagnosis (S309) with respect to the NOx purification function after replacement of the NOx sensor shown in Fig. 6(A).

First, as shown in Fig. 3, the electronic control device (8) of the engine (1) causes the engine (1) during normal operation to perform failure diagnosis (S4) based on the NOx purification rate of the SCR (7) during engine operation. When the failure determination (S5) for the engine (1) is made, the electronic control device (8) causes the display device (1b) of the engine (1) to display the failure determination for the engine (S6), and at the same time, to display a recommendation of NOx sensor failure diagnosis.

Next, when the user who has checked the above display (S6) of the display device (1b) of the engine (1) requests a service engineer to perform NOx sensor failure diagnose, the service engineer causes the engine (1) to perform an NOx sensor failure diagnosis operation (S103) accompanied by DPF regeneration processing, EGR stop, and urea solution injection stop under the control of the electronic control device (8) as shown in Fig. 4(B), and transmits (S105) detection data of the pair of NOx concentrations (J)(K) detected by the pair of NOx sensors (3)(4) on the exhaust upstream side and the exhaust downstream side of the SCR (6) to the engine diagnosis tool (2) in the NOx sensor failure diagnosis operation (S103), and as shown in Fig. 4(A), the service engineer causes the engine diagnosis tool (2) to perform NOx sensor failure diagnosis (S108) based on the detection data.

In this method for diagnosing an engine, the following effects can be obtained.

That is, during the NOx sensor failure diagnosis operation (S103) shown in Fig. 4(B), the temperature of the exhaust gas is raised through the DPF regeneration processing to stabilize the exhaust flow rate, the urea crystal adhering to the exhaust passage (12c) is burned out, and the NOx concentration is further increased through EGR stop. Thus, the accuracy of the detection data of the NOx concentrations (J)(K) by the pair of NOx sensors (3)(4) is enhanced. Moreover, the detection data is not affected by the NOx purification function of the SCR (7) because of the urea solution injection stop, and is hardly changed. The detection data of the pair of NOx concentrations (J)(K), which has high accuracy and is hardly changed, is transmitted (S105)(S205) to the engine diagnosis tool (2), whereby the engine diagnosis tool (2) can perform the failure diagnosis (S108) of the pair of NOx sensors (3)(4) based on the detection data of the pair of NOx concentrations (J)(K) as illustrated in Fig. 4(A), and the accuracy of the failure diagnosis (S108) of the pair of NOx sensors (3)(4) can be enhanced.

In this method for diagnosing an engine, the following effects can also be obtained.

As shown in Fig. 4(A), detection data of the pair of NOx concentrations (J)(K) detected by the pair of NOx sensors (3)(4) in the NOx sensor failure diagnosis operation (S103)(S203) is transmitted (S105)(S205) to the engine diagnosis tool (2) outside the engine (1) that performs failure diagnosis (S108)(S208) of the pair of NOx sensors (3)(4) based on the detection data. Thus, the failure diagnosis (S108)(S208) of the NOx sensors (3)(4) can be performed with the exhaust device (12) shown in Fig. 1 being mounted on the engine (1).

As shown in Fig. 4(A), in the engine diagnosis tool (2), when the absolute value of the difference between the pair of NOx concentrations (J)(K) exceeds a predetermined determination threshold value (L), failure determination (S109) for the NOx sensor is performed, and when the absolute value of the difference is equal to or less than the predetermined determination threshold value (L), a normality determination (S111) for the pair of NOx sensors (3)(4) is performed.

As shown in Fig. 4(A), in the engine diagnosis tool (2), in response to the failure determination for the NOx sensor (S109) or the normality determination for the pair of NOx sensors (3)(4) (S111), a tool display unit (2a) of the engine diagnosis tool (2) shown in Fig. 1 is caused to perform a failure determination display of the NOx sensor (S110) or a normality determination display of the pair of NOx sensors (3)(4) (S112) shown in Fig. 4(A).

As shown in Fig. 4(A), when the failure determination display of the NOx sensor (S110) is performed, a replacement recommendation display of one NOx sensor and a failure diagnosis recommendation display for the NOx sensor after replacement of one NOx sensor are also performed.

The service engineer who has confirmed this display replaces one of the NOx sensors (3)(4) in the pair with a NOx sensor that has been previously confirmed to be normal, and performs failure diagnosis (S208) of the NOx sensor after replacement of one of the NOx sensors shown in Fig. 5(A).

As shown in Fig. 4(A), when the normality determination display (S112) of the pair of NOx sensors (3)(4) is performed, an inspection recommendation display for components other than the pair of NOx sensors (3)(4) is also simultaneously performed, and the service engineer who has confirmed this display inspects a sensor such as the SCR inlet-side exhaust temperature sensor (7c) and an actuator such as the urea solution injector (9).

After the NOx sensor is replaced in accordance with the NOx sensor failure determination (S109) shown in Fig. 4(A), as shown in Fig. 5(B), the electronic control device (8) is controlled to perform the NOx sensor failure diagnosis operation (S203) after replacement of NOx sensor involving DPF regeneration processing, EGR stop, and urea solution injection stop. In the NOx sensor failure diagnosis operation (S203), detection data of the pair of NOx concentrations (J)(K) detected by the pair of NOx sensors (3)(4) including the replaced NOx sensor (3) is transmitted (S205) to the engine diagnosis tool (2). As illustrated in Fig. 5(A), the engine diagnosis tool (2) is caused to perform failure diagnosis (S208) of the NOx sensor after replacement of NOx sensor based on the detection data.

As shown in Fig. 5(A), in the engine diagnosis tool (2), when the absolute value of the difference between the pair of NOx concentrations (J)(K) exceeds a predetermined determination threshold value (L), failure determination (S209) for the unreplaced NOx sensor (4) is performed, and when the absolute value of the difference is equal to or less than the predetermined determination threshold value (L), normality determination (S211) for the pair of replaced and unreplaced NOx sensors (3)(4) is performed.

As shown in Fig. 5(A), in the engine diagnosis tool (2), the tool display unit (2a) of the engine diagnosis tool (2) is caused to perform a failure determination display (S210) for the unreplaced NOx sensor (4) or a normality determination display (S212) for the pair of replaced and unreplaced NOx sensors (3)(4) in response to the failure determination (S209) of the unreplaced NOx sensor (4) or the normality determination (S311) for the pair of replaced and unreplaced NOx sensors (3)(4).

As shown in Fig. 5(A), when the failure determination display for the NOx sensor (S210) is performed, a replacement recommendation display of the other (non-replaced) NOx sensor and an engine function recovery check diagnosis recommendation display after replacement of NOx sensor are also performed.

The service engineer who has confirmed this display replaces the other (non-replaced) NOx sensor with a NOx sensor that has been previously confirmed to be normal, and performs the engine function recovery check diagnosis with respect to the NOx purification function after replacement of NOx sensor shown in Fig. 6.

Further, as shown in Fig. 5(A), when the normality determination display (S212) for the pair of NOx sensors (3)(4) is performed, an engine function recovery check diagnosis recommendation display with respect to the NOx purification function after replacement of NOx sensor is also performed, and the service engineer who has confirmed this display performs the engine function recovery check diagnosis with respect to the NOx purification function after replacement of NOx sensor shown in Fig. 6.

After the NOx sensor is replaced in accordance with the failure determination (S109) for the NOx sensor shown in Fig. 4(A) or Fig. 5(A) or the failure determination (S109)(S209) of the unreplaced NOx sensor (4), as shown in Fig. 6(B), under the control of the electronic control device (8), the engine (1) is caused to perform an engine function recovery check operation (S303) after replacement of NOx sensor accompanied by DPF regeneration processing, EGR stop, and urea solution injection. Detection data of the pair of NOx concentrations (J)(K) detected by the pair of NOx sensors (3)(4) including the NOx sensor in the engine function recovery check operation (S303) is transmitted to the engine diagnosis tool (2) as shown in Fig. 6(A), and the engine diagnosis tool (2) is caused to perform an engine function recovery check diagnosis (S309) with respect to the NOx purification function after replacement of NOx sensor based on the transmitted data.

As shown in Fig. 6(A), in the engine diagnosis tool (2), when the absolute value of the difference between the theoretical NOx purification rate (E) and the actual NOx purification rate (F) of the SCR (7) calculated based on the detection data of the pair of NOx concentrations (J)(K) is equal to or less than a predetermined determination threshold value (G), the engine function recovery confirmation determination (S310) with respect to the NOx purification function is performed, and when the absolute value of the difference exceeds the determination threshold value (G), the engine function recovery unconfirmation determination (S312) with respect to the NOx purification function is performed.

As shown in Fig. 6(A), in the engine diagnosis tool (2), in response to the engine function recovery confirmation determination (S311) or the engine function recovery unconfirmation determination (S313), the tool display unit (2a) of the engine diagnosis tool (2) is caused to perform an engine function recovery confirmation determination display (S311) or an engine function recovery unconfirmation determination display (S313) after replacement of NOx sensor.

As shown in Fig. 6(A), when the engine function recovery unconfirmation determination display with respect to the NOx purification function (S313) is made, an inspection recommendation display for components other than the pair of NOx sensors (3)(4) is also made, and the service engineer who has confirmed this display inspects the sensors such as the SCR inlet-side exhaust temperature sensor (7c) and the components such as the urea solution injector (9).

As shown in Fig. 1, the engine diagnosis tool (2) is a portable information terminal device having an electronic control function such as a notebook computer or a tablet, and includes the tool display unit (2a), a failure diagnosis instruction switch (2b), a function recovery confirmation diagnosis instruction switch (2c), and a transmission/reception unit (2d) that transmits and receives data and signals to and from a transmission/reception unit (8a) of the electronic control device (8) of the engine (1) in a wired or wireless manner.

Similarly to the display device (1b) of the engine (1), a liquid crystal display, an organic EL display, or the like can be used as the tool display unit (2a). In this case, the tool display unit (2a) can display, as character information, the NOx sensor failure determination displays (S110)(S210) and the pair of NOx sensors normality determination displays (S112)(S212) shown in Figs. 4(A) and 5(A).

A display lamp or an LED can also be used as the tool display unit (2a). LED is an abbreviation of light emitting diode. In this case, the tool display unit (2a) can display the display in an identifiable manner by turning on, blinking, turning off, or the like.

The method for diagnosing an engine will be described based on the flowcharts illustrated in Figs. 3 to 6.

Fig. 3 is a flowchart of engine failure diagnosis during normal operation.

This failure diagnosis is performed under the control of the electronic control device (8).

In step (S1), the SCR upstream NOx concentration (J), the SCR downstream NOx concentration (K), and other data are input to an input unit of the electronic control device (8). Other data refers to data necessary for calculation of a theoretical NOx purification rate (E), calculation of an actual NOx purification rate (F), and setting of a determination threshold value (G), which will be described later. Specifically, other data refers to an SCR inlet-side exhaust temperature for estimating the catalyst temperature of the SCR (7), an intake flow rate for estimating the flow rate of the exhaust (15), the injection amount of the urea solution (9a) of the urea solution injector (9) for estimating the ammonia adsorption amount of the SCR (7), and the like.

In step (S2), the calculation unit of the electronic control device (8) calculates the theoretical NOx purification rate E and the actual NOx purification rate (F), and in step (S3), the determination threshold value (G) is set. The determination threshold value (G) is a positive number.

In step (S4), when the condition for determining failure of the engine (1) is satisfied, a diagnosis unit of the electronic control device (8) performs failure determination for the engine (1) in step (S5).

The condition for determining failure of the engine (1) in step (S4) is that the absolute value of the difference between the theoretical NOx purification rate (E) and the actual NOx purification rate (F) exceeds the determination threshold value (G). In step (S6), a display instruction unit of the electronic control device (8) causes the display device (1b) of the engine (1) to perform a failure determination display (S6) for the engine (1) and an NOx sensor diagnosis recommendation display.

Fig. 4 shows flows of the NOx sensor failure diagnosis (first time).

A user who has confirmed the NOx sensor diagnosis recommendation display in step (S6) shown in Fig. 3 on the display device (1b) of the engine (1) requests the service engineer to perform the NOx sensor failure diagnosis (first time), and the service engineer performs the diagnosis using the engine diagnosis tool (2).

In step (S101) shown in Fig. 4(A), a diagnosis command unit of the engine diagnosis tool (2) transmits a signal of an NOx sensor failure diagnosis command based on a command operation of the failure diagnosis instruction switch (2b) of the engine diagnosis tool (2) shown in Fig. 1 by the service engineer.

In step (S102) shown in Fig. 4(B), when the reception of the signal of the NOx sensor failure diagnosis command is affirmed by a reception determination unit of the electronic control device (8) of the engine (1), in step (S103), an NOx sensor failure diagnosis operation is performed under the control of the operation control unit of the electronic control device (8). The NOx sensor failure diagnosis operation involves DPF regeneration processing, EGR stop, and urea solution injection stop. The DPF regeneration processing, the EGR stop, and the urea solution injection stop are automatically performed by the electronic control device (8) of the engine (1) based on the signal of the NOx sensor failure diagnosis command.

In step (S104), a data acquisition unit of the electronic control device (8) of the engine (1) acquires detection data of the pair of SCR upstream NOx concentration (J) and SCR downstream NOx concentration (K), and in step (S105), the pair of detection data is transmitted from the transmission/reception unit (8a) of the electronic control device (8) shown in Fig. 1 to the transmission/reception unit (2d) of the engine diagnosis tool (2).

In step (S106) shown in Fig. 4(A), when reception of the pair of detection data is affirmed by the reception determination unit of the engine diagnosis tool (2), the determination threshold value (L) is set by a determination threshold value setting unit of the engine diagnosis tool (2) in step (S107). The determination threshold value (L) is a positive number.

In step (S108), a diagnosis unit of the engine diagnosis tool (2) performs NOx sensor failure diagnosis.

The condition for determining failure of the NOx sensor in the NOx sensor failure diagnosis in step (S108) is that the absolute value of the difference between the detection data of the pair of SCR upstream NOx concentration (J) and SCR downstream NOx concentration (K) exceeds the determination threshold value (L). When the determination condition is satisfied, a failure determination unit of the engine diagnosis tool (2) performs NOx sensor failure determination in step (S109). In step (S110), the display instruction unit of the engine diagnosis tool (2) causes the tool display unit (2a) to perform NOx sensor failure determination display, and causes the display unit to perform replacement recommendation display for one NOx sensor and failure diagnosis recommendation display for the NOx sensor after replacement of the NOx sensor.

In the NOx sensor failure diagnosis in step (S108) shown in Fig. 4(A), which of the pair of NOx sensors (3)(4) has failed cannot be determined. Thus, in the replacement recommendation display for one NOx sensor in step (S110), the failed NOx sensor of the pair of NOx sensors (3)(4) is not designated. In this case, the service engineer selects either one of the pair of NOx sensors (3)(4), and replaces the one NOx sensor with a NOx sensor already confirmed to be normal.

When it can be predicted that one of the pair of NOx sensors has a high probability of failure because of a difference in thermal load received by the pair of NOx sensors (3)(4), the replacement recommendation display for the one NOx sensor in step (S110) may be a display in which an NOx sensor having a high probability of failure is designated among the pair of NOx sensors (3)(4). In this case, the service engineer can replace the designated NOx sensor among the pair of NOx sensors (3)(4) with an NOx sensor already confirmed to be normal according to the designation of the recommendation.

The NOx sensor designated by the replacement recommendation display for one NOx sensor in step (S110) may be any one of the pair of NOx sensors (3)(4).

As shown in Fig. 4(A), in the NOx sensor failure diagnosis in step (S108), when the condition for determining failure of the NOx sensor is not satisfied, that is, when the absolute value of the difference between the detection data of the pair of SCR upstream NOx concentrations (J) and SCR downstream NOx concentrations (K) is equal to or less than the determination threshold value (L), the failure determination unit of the engine diagnosis tool (2) performs normality determination on the pair of NOx sensors (3)(4) in step (S111). In step (S112), the display instruction unit of the engine diagnosis tool (2) causes the tool display unit (2a) to perform normality determination display for the pair of NOx sensors (3)(4) and inspection recommendation display for components other than the pair of NOx sensors (3)(4) to recommend the service engineer to inspect sensors such as the SCR inlet-side exhaust temperature sensor (7c) and actuators such as the urea solution injector (9).

Figs. 5A and 5B show flows of the NOx sensor failure diagnosis (second time).

The NOx sensor failure diagnosis (second time) is performed using the engine diagnosis tool (2) after the service engineer who has confirmed the replacement recommendation display of one of the NOx sensors in step (S110) shown in Fig. 4(A) on the tool display unit (2a) of the engine diagnosis tool (2) replaces one of the NOx sensors with the NOx sensor already confirmed to be normal.

This NOx sensor failure diagnosis (second time) shown in Fig. 5 is performed in the same procedure as the NOx sensor failure diagnosis (first time) shown in Fig. 4 after replacement of one of the pair of NOx sensors in the NOx sensor failure diagnosis (first time) shown in Fig. 4. The processing of steps (S201) to (S212) excluding the recommendation display of steps (S210)(S212) shown in Fig. 5 is the same processing as the processing of steps (S101) to (S112) in which the last two digits of the NOx sensor failure diagnosis (first time) shown in Fig. 4 are the same.

The display of steps (S210)(S212) shown in Fig. 5 is different from the display of steps (S110)(S112) shown in Fig. 4(A) in the following points.

That is, the display in step (S110) is the failure determination display for the NOx sensor, the replacement recommendation display for one NOx sensor, and the failure diagnosis recommendation display for the NOx sensor after replacement of one NOx sensor, but the display in step (S210) is the failure determination display for the NOx sensor and the engine function recovery check diagnosis recommendation display after replacement of the NOx sensor.

The display in step (S112) is the normality determination display for the pair of NOx sensors and the inspection recommendation display for the components other than the pair of NOx sensors, but the display in step (S212) is the normality determination display for the pair of NOx sensors and an engine function recovery check diagnosis recommendation display after replacement of the NOx sensor.

The reason that the replacement recommendation display for the other (non-replaced) NOx sensor is performed in step (S210) is that it is estimated that the NOx sensor failure determination in step (S209) is caused by the failure of the other (non-replaced) NOx sensor because one NOx sensor has been replaced with an NOx sensor that has been confirmed to be normal in advance. The reason that the engine function recovery check diagnosis recommendation display after replacement of the NOx is performed in step (S210) is that the other (non-replaced) NOx sensor is also replaced with an NOx sensor that has been confirmed to be normal in advance, and both of the pair of NOx sensors (3)(4) become normal, and it is expected that the function of the engine is recovered with respect to the NOx purification function after replacement of the NOx sensor.

The reason that the engine recovery check diagnosis recommendation display after replacement of NOx is performed in step (S212) is that it is confirmed that both of the pair of NOx sensors (3)(4) are normal through the normality determination for the pair of NOx sensors in step (S211), and it is expected that the function of the engine is recovered with respect to the NOx purification function after replacement of the NOx sensor.

Fig. 6 shows flows of an engine function recovery check diagnosis with respect to the NOx purification function after replacement of the NOx sensor.

The engine function recovery check diagnosis after replacement of the NOx sensor is usually performed using the engine diagnosis tool (2) by a service engineer who has confirmed the engine function recovery check diagnosis recommendation display with respect to the NOx purification function after replacement of the NOx sensor in step (S110) shown in Fig. 4(A) or steps (S210)(S212) shown in Fig. 5(A) on the display device (1b) of the engine (1).

In step (S301) shown in Fig. 6(A), the diagnosis command unit of the engine diagnosis tool (2) transmits a signal of an engine function recovery check diagnosis command based on a command operation of the engine diagnosis tool (2) by the service engineer.

In step (S302) shown in Fig. 6(B), when the reception of the signal of the function recovery check diagnosis command is affirmed by the reception determination unit of the electronic control device (8) of the engine (1), the operation control unit of the electronic control device (8) performs an engine function recovery check operation in step (S303). The NOx sensor failure diagnosis operation involves DPF regeneration processing, EGR stop, and urea solution injection. The DPF regeneration processing, the EGR stop, and the urea solution injection stop are automatically performed by the electronic control device (8) of the engine (1) based on the signal of the engine function recovery check diagnosis command.

In step (S304), the data acquisition unit of the electronic control device (8) of the engine (1) acquires a pair of SCR upstream NOx concentration (J) and SCR downstream NOx concentration (K), and other detection data. In step (S305), the transmission/reception unit (8a) of the electronic control device (8) transmits the detection data to the transmission/reception unit (2d) of the engine diagnosis tool (2).

When the reception of the detection data is affirmed by the reception determination unit of the engine diagnosis tool (2) in step (S306) shown in Fig. 6(A), the theoretical NOx purification rate (E) and the actual NOx purification rate (F) are calculated by the calculation unit of the engine diagnosis tool (2) in step (S307), and the determination threshold value (G) is set by the threshold value setting unit of the engine diagnosis tool (2) in step (S308). The determination threshold value (G) is a positive number.

In step (S309), the diagnosis unit of the engine diagnosis tool (2) performs engine function check diagnosis.

The condition for determining the engine function recovery unconfirmation in the engine function check diagnosis in step (S309) is that the absolute value of the difference between the theoretical NOx purification rate (E) and the actual NOx purification rate (F) is equal to or less than the determination threshold value (G). When this determination condition is satisfied, a function confirmation determination unit of the engine diagnosis tool (2) makes the engine function recovery confirmation determination in step (S310), and the display instruction unit of the engine diagnosis tool (2) makes an engine function recovery confirmation determination display on the tool display unit (2a) in step (S311).

In step (S310), when the function confirmation determination unit of the engine diagnosis tool (2) makes the engine function recovery confirmation determination, the electronic control device (8) of the engine (1) releases the output restriction of the engine (1).

As shown in Fig. 6(A), when the condition for determining engine function recovery confirmation is not satisfied in the engine function recovery check diagnosis in step (S309), that is, when the absolute value of the difference between the theoretical NOx purification rate (E) and the actual NOx purification rate (F) exceeds the determination threshold value (G), the failure determination unit of the engine diagnosis tool (2) performs the engine function recovery unconfirmation determination in step (S312), and the display instruction unit of the engine diagnosis tool (2) performs the engine function recovery unconfirmation determination and performs inspection recommendation display for the components other than the pair of NOx sensors (3)(4) in step (S313) with the tool display unit (2a).

The failure diagnosis of the pair of NOx sensors (3)(4) and the function recovery check diagnosis with respect to the NOx purification function of the engine after replacement of the NOx sensor can be performed by the user himself/herself when the user can use the engine diagnosis tool (2).

### DESCRIPTION OF REFERENCE SIGNS

(1) Engine
(2) Engine diagnosis tool
(2a) Tool display unit
(3) NOx sensor on exhaust upstream side
(4) NOx sensor on exhaust downstream side
(5) EGR device
(6) DPF
(7) SCR
(8) Electronic control device
(9) Urea solution injector
(E) Theoretical purification rate
(F) Actual purification rate
(G) Determination threshold value
(J) SCR upstream NOx concentration
(K) SCR downstream NOx concentration
(L) Determination threshold value
(S103) NOx sensor failure diagnosis operation
(S105) Transmit detection data to engine diagnosis tool
(S108) NOx sensor failure diagnosis
(S109) NOx sensor failure determination
(S110) NOx sensor failure determination display
(S111) Normality determination for pair of NOx sensors
(S112) Normality determination display for pair of NOx sensors
(S203) NOx sensor failure diagnosis operation after replacement of NOx sensor
(S205) Transmit detection data to engine diagnosis tool
(S208) Failure diagnosis of NOx sensor after replacement of NOx sensor
(S209) Failure determination for unreplaced NOx sensor
(S210) Failure determination display for unreplaced NOx sensor
(S211) Normality determination for pair of replaced and unreplaced NOx sensors
(S212) Normality determination display for pair of replaced and unreplaced NOx sensors
(S303) Engine function recovery check operation after replacement of NOx sensor
(S305) Transmit
(S309) Engine function recovery check diagnosis
(S310) Engine function recovery confirmation determination
(S311) Engine function recovery unconfirmation determination display
(S312) Engine function recovery unconfirmation determination
(S313) Engine function recovery unconfirmation determination display

## Claims

1. An engine comprising: a DPF; an SCR; a pair of NOx sensors on an exhaust upstream side and an exhaust downstream side of the SCR; an electronic control device; an EGR device; and a urea solution injector, wherein
the engine is configured to perform an NOx sensor failure diagnosis operation accompanied by DPF regeneration processing, EGR stop, and urea solution injection stop under control of the electronic control device, and to transmit detection data of a pair of NOx concentrations detected by the pair of NOx sensors in the NOx sensor failure diagnosis operation to an engine diagnosis tool outside the engine that performs failure diagnosis of the pair of NOx sensors based on the detection data.

2. The engine according to claim 1, wherein
the engine is configured to perform an engine function recovery check operation with respect to an NOx purification function after replacement of NOx sensor accompanied by the DPF regeneration processing, the EGR stop, and the urea solution injection under the control of the electronic control device, and to transmit detection data of the pair of NOx concentrations detected by the pair of NOx sensors in the function recovery check operation to the engine diagnosis tool that performs engine function recovery check diagnosis with respect to the NOx purification function after replacement of the NOx sensor based on the detection data.

3. A method for diagnosing an engine, the method comprising:
controlling an electronic control device to cause an engine to perform an NOx sensor failure diagnosis operation accompanied by DPF regeneration processing, EGR stop, and urea solution injection stop, and transmitting, to an engine diagnosis tool, detection data of a pair of NOx concentrations detected by a pair of NOx sensors on an exhaust upstream side and an exhaust downstream side of an SCR in the NOx sensor failure diagnosis operation; and
causing the engine diagnosis tool to perform failure diagnosis of the pair of NOx sensors based on the detection data.

4. The method for diagnosing an engine according to claim 3,
wherein the engine diagnosis tool performs an NOx sensor failure determination when an absolute value of a difference between the pair of NOx concentrations exceeds a predetermined determination threshold value, and performs a normality determination for the pair of NOx sensors when the absolute value of the difference is equal to or less than the predetermined determination threshold value.

5. The method for diagnosing an engine according to claim 4,
wherein in the engine diagnosis tool, an NOx sensor failure determination display or a normality determination display for the pair of NOx sensors is performed on a tool display unit of the engine diagnosis tool in accordance with the NOx sensor failure determination or the normality determination for the pair of NOx sensors.

6. The method for diagnosing an engine according to claim 4,
wherein after replacement of the NOx sensor in accordance with the NOx sensor failure determination, an electronic control device is controlled to perform an NOx sensor failure diagnosis operation after replacement of the NOx sensor, the NOx sensor failure diagnosis operation involving DPF regeneration processing, EGR stop, and urea solution injection stop, and in the NOx sensor failure diagnosis operation, detection data of a pair of NOx concentrations detected by the pair of NOx sensors including the NOx sensor that has been replaced is transmitted to the engine diagnosis tool, and the engine diagnosis tool is caused to perform NOx sensor failure diagnosis after replacement of the NOx sensor based on the detection data.

7. The method for diagnosing an engine according to claim 6,
wherein the engine diagnosis tool performs a failure determination for an unreplaced NOx sensor when the absolute value of the difference between the pair of NOx concentrations exceeds a predetermined determination threshold value, and performs a normality determination for the pair of replaced and unreplaced NOx sensors when the absolute value of the difference is equal to or less than the predetermined determination threshold value.

8. The method for diagnosing an engine according to claim 7,
wherein in the engine diagnosis tool, a tool display unit of the engine diagnosis tool is caused to perform a failure determination display for the NOx sensor that has not been replaced or a normality determination display for the pair of replaced and unreplaced NOx sensors in response to the failure determination for the unreplaced NOx sensor or the normality determination for the pair of replaced and unreplaced NOx sensors.

9. The method for diagnosing an engine according to claim 4 or 7,
wherein after replacement of the NOx sensor in accordance with the NOx sensor failure determination or the failure determination for the NOx sensor that has not been replaced, the electronic control device is controlled to cause the engine to perform an engine function recovery check operation with respect to an NOx purification function after replacement of the NOx sensor accompanied by DPF regeneration processing, EGR stop, and urea solution injection, transmit detection data of a pair of NOx concentrations detected by the pair of NOx sensors including the NOx sensor that has been replaced in the engine function recovery check operation to the engine diagnosis tool, and cause the engine diagnosis tool to perform an engine function recovery check diagnosis with respect to the NOx purification function after replacement of the NOx sensor based on the data that has been transmitted.

10. The method for diagnosing an engine according to claim 9,
wherein in the engine diagnosis tool, when the absolute value of the difference between a theoretical NOx purification rate and an actual NOx purification rate of SCR calculated based on detection data of the pair of NOx concentrations is equal to or less than a predetermined determination threshold value, an engine function recovery confirmation determination with respect to the NOx purification function is performed, and when the absolute value of the difference exceeds the determination threshold value, an engine function recovery unconfirmation determination with respect to the NOx purification function is performed.

11. The method for diagnosing an engine according to claim 10,
wherein in the engine diagnosis tool, in response to the engine function recovery confirmation determination or the engine function recovery unconfirmation determination, a tool display unit of the engine diagnosis tool is caused to perform an engine function recovery confirmation determination display or an engine function recovery unconfirmation determination display after replacement of the NOx sensor.
